# EUROPEAN PATENT SPECIFICATION

(11) **EP 4 415 917 B1**
(45) Date of publication and mention of the grant of the patent: **26.11.2025**
(21) Application number: 21819329.0
(22) Date of filing: 12.10.2021
(51) Int. Cl.: B23K 26/03, B23K 26/0622, B23K 26/362, B23K 26/361, B23K 101/20, B23K 101/34

(54) **METHOD OF SURFACE LAYER REMOVAL FROM THE SURFACE OF GEOMETRICALLY COMPLEX EDGES OF CUTTING TOOLS USING LASER STRIPPING METHOD**
VERFAHREN ZUR OBERFLÄCHENSCHICHTENTFERNUNG VON GEOMETRISCH KOMPLEXEN KANTEN VON SCHNEIDWERKZEUGEN MITTELS LASERSTRIPPVERFAHREN
PROCÉDÉ D'ÉLIMINATION DE COUCHE DE SURFACE À PARTIR DE LA SURFACE DE BORDS GÉOMÉTRIQUEMENT COMPLEXES D'OUTILS DE COUPE À L'AIDE D'UN PROCÉDÉ DE DÉCAPAGE AU LASER

(43) Date of publication of application: 21.08.2024
(73) Proprietor: Hofmeister S.R.O., 32600 Plzen (CZ); Ceské vysoké ucení technické v Praze, 16000 Praha 6 (CZ)
(72) Inventor: KOZMÍN, Pavel, 39701 Písek (CZ); CERMÁK, Adam, 30100 Plzen (CZ); SORM, Martin, 32600 Plzen (CZ); SYROVÁTKA, Simon, 31200 Plzen (CZ); SYROVÁTKA, Jirí, 31200 Plzen (CZ); ZEMAN, Pavel, 25087 Vysehorovice (CZ); PRIMUS, Tomás, 34401 Domazlice (CZ)
(74) Representative: Zmeskal, Lukas
(86) International application number: PCT/CZ2021/050109
(87) International publication number: WO 2022/199725

(56) References cited:
- EP-B1- 2 314 412
- WO-A1-2016/005133
- DE-A1- 4 431 059

## Description

### Field of the invention

The present invention relates to the field of surface layer removal from the surface of geometrically complex edges of cutting tools.

### Background of the invention

According to the prior art, the cutting tools are provided with abrasion resistant surface layer deposited on the substrate surface/cutting material. The cutting tools with geometrically complex edge include in particular mills, drills, screw taps, countersinks, reamers, or the combination tools thereof. The geometrically complex edge is characterized in that the edge comprises surfaces, which are not defined as planar only but shaped generally, or 3D, in addition to the cutting edges extending in the direction of helix.

The term "surface layer", as used herein for the purposes of the present patent application, refers to both thin layer and coating. Thickness of the surface layer ranges from hundreds to tens of micrometres, and may be provided by various processes, such as PVD, CVD technologies, and variants and combinations thereof. Distinguishing the border between a thin layer or coating may be often very difficult, and the border sometimes merges. However, correct understanding of the coating refers to a surface treatment in which diffusion interfusing of the substrate with the deposited material does not occur, and its thickness is usually higher than of the thin layer. The diffusion interfusing of the substrate with the deposited material is the fundamental assumption for the thin layer.

The purpose of the surface layer is, in particular, reducing of heat stress of the tool and reducing of friction between the edge of the cutting tool and machined material. Owing to this, the cutting tool is more durable and cutting under more strenuous conditions is possible (e.g., at higher cutting speed). The surface layer subjects to wear as the cutting tool is used. When the surface layer is disrupted, its protective function is lost. Despite the fact the tool may still be used in the cutting process, it is subjected to intensive wear that also results in earlier replacement of the tool. The cutting tools having geometrically complex edges are very demanding for production, and hence expensive. Comparing to the price of the cutting tool itself, both price and production difficulty of the surface layer are usually very low.

The used cutting tools with worn out surface layer on the edge are reconditioned as it is much cheaper than production of a brand new cutting tool. For proper reconditioning, the disrupted (worn out) surface layer must be at least from the active portions of the tool removed from the surface of the cutting tool. This in particular applies to the finishing, very fine tools for drilling of holes and shaped openings. The removal process includes plurality of process steps, such as cleaning or regrinding. Only after that the edges of the cutting tool may be provided with a new surface layer. When the reconditioning is done correctly (quality removal of the worn out surface layer), the properties of the cutting tool being reconditioned with a new surface layer are equal to a new cutting tool, however, at substantially lower costs.

According to the prior art, the worn out surface layer may be removed chemically by etching. The disadvantages may include influencing of the substrate properties, impossibility of effective removal of selected types of coatings, or more significant impact of the technique on environment.

Another known possibility for removal of the surface layer is mechanical cleaning, e.g., blasting. The disadvantages include low quality, difficult repeatability, and low productivity of the removal.

Document EP 2 314 412 B1 discloses a method of surface layer removal from the surface of geometrically complex edges of cutting tools. The method uses laser stripping technology by the ultra-short pulse laser system. Processed cutting tool comprises a substrate and a covering surface layer deposited thereon. The surface of the cutting tool is provided with the active portions and inactive portions, where said active portions include the edge with the flank, front end and transitional area. The described method comprises clamping of the tool to the ultra-short pulse laser system with the laser beam source.

Document DE 44 31 059 A1 discloses a video camera detection system for measuring of the drilling tools. The opto-electronic detection of the tool outline is with the use of the video camera and is based on the image photographs in different tool positions. Digital output of measurement values includes the diameter, the length and angle etc., of at least one tool section. During measuring, the tool to be measured is placed in different positions. The purpose of the system is a tool quality test by comparing the actual and target geometry.

Document WO 2016/005133 A1 discloses a method for producing a workpiece surface or a groove inner surface on a bar-shaped, in particular cylindrical, workpiece. A rotary tool is intended to be produced from the workpiece. The material removal to produce the workpiece surface is performed with laser beam pulses. Positioning of the workpiece is obtained via a plurality of machine axis drives in such a way that the pulse area is oriented substantially at right angles to the emission direction of the laser beam pulses. During material removal, the pulse area is moved along a predetermined movement path while maintaining the orientation relative to the workpiece.

### Summary of the invention

The present invention provides the method of surface layer removal from the edges of cutting tool using the laser stripping method by ultra-short pulse laser system. The process is based on the combination of detecting and evaluating of the tool by the laser system, definition of surfaces to be processed, proposal of strategy, and performing of the laser stripping technique. The method may be used for the surfaces of geometrically complex edges of the cutting tools consisting of generally shaped surfaces, so-called 3D surfaces. The concerned cutting tool comprises the substrate with the surface layer deposited thereon. With respect to the shape and function of the surface portions of the tool, the tool comprises a cutting portion and a clamping portion. The cutting portion then comprises at least one active portion - an edge (the portion being in direct contact with the workpiece and chip, and contributes to cutting of the chips from the material, e.g., flank, front end, and transitional area (cutting edge), chipper surfaces, etc.), and at least one inactive portion - a flute (e.g., the other surfaces intended for chip removal from the point of cutting, or surfaces for process fluid supply to the point of cutting).

The tool is clamped to the ultra-short pulse laser system in the first step. Then, using a camera system with illumination feature and a control unit of the ultra-short pulse laser system, at least tool rotation axis, lead angle of the tool helix, tool diameter reduction in the cutting portion, and tool edge geometry are detected and analyzed. The camera with illumination feature is included in the ultra-short pulse systems known from the prior art. Then, the control unit of the ultra-short pulse laser system virtually splits up the tool surface into the portion being processed and the portion not being processed (i.e., the portion from which the surface layer is removed, and the portion from which it is not). The portion being processed comprises in particular the active portions. For quality reconditioning of the tool, removal of the worn out surface layer must be made from the selected active portions to the maximum extent possible. In some cases, retaining of the worn out or unimpaired surface layer on the inactive portions will not be detrimental to the reconditioning of the tool. On the contrary, costs may be saved when the surface layer is not removed from some portions of the tool.

Based on data from analysis (detection, geometry analysis, virtual splitting up) and knowledge of the laser beam depth of field, the control unit of the ultra-short pulse laser system splits up the processed cutting portions of the 3D edge surface of the cutting tool into segments having relative position shifted by defined increment. The laser beam depth of field in combination with curvature (bending) of the 3D edge surface of the cutting tool in the segment is the size limit of the surface of each segment. The segment must be of such maximum dimensions so that all its surface is in a distance from the laser beam focal point, in which the effective removal of the surface layer occurs. Thus, no portion of the surface in said segment of the cutting tool may be too far from or too close to the laser beam focal point. That portion would be outside the laser beam depth of field and the surface layer would not be sufficiently removed here. Therefore, the segments in the tool portions having less bent 3D surface may have larger surface area than in the portions having the surface bent more. When the segment edges do not precisely line up due to bending of the edge surface of the cutting tool, it is recommended that slight overlap of the segments is made so that no exposed part of the surface layer remain. Double processing of single point by the laser beam, if any, will cause no significant harm for further processing of the cutting tool. On the contrary, a portion of the surface layer not removed would have an unfavourable impact on quality of the newly deposited surface layer in reconditioning of the tool.

Then the laser stripping follows. In doing so, the laser beam of the ultra-short pulse laser system is scanned within the defined orientation with respect to the longitudinal axis of the tool. This removes (evaporates) the surface layer on the segment surface of statically fixed tool. The laser stripping ends after the surface layer of said surface segment of the tool is removed. For the next surface segment, if any, the relative position of the tool and laser beam source changes by an increment. In this way, this next segment takes the correct position with respect to the laser beam source. Then, the laser stripping according to previous step is carried out for this next segment. The steps comprising the change of relative position of the tool and laser beam source by the increment and the laser stripping repeats until the surface layer from all the processed portion is removed. For a standard cutting tool having geometrically complex edges, the described removal of the surface layer needs to be successively carried out on tens up to thousands of segments.

It is particularly favourable for quality removal of the surface layer to know its ablation attributes (i.e., the conditions under which the surface layer is removed (evaporated) by the laser beam). The ablation attributes are preferably determined in a step between clamping of the tool to the ultra-short pulse laser system and removal of the surface layer. The determination of the ablation attributes of the surface layer of the tool is made for at least one surface segment of the tool using the laser beam of the ultra-short pulse laser system. In this way, the parameters of the ultra-short pulse laser system (in particular energy density within the pulse), which are needed for removal of the surface layer, may be determined.

Given the fact that the surface layer is usually deposited to a higher amount of the tools at the same time in the course of single production lot, the surface layer has identical attributes on all tools within one production lot. It is therefore enough to determine the ablation attributes of the surface layer for single tool in single production lot. Configuration of parameters for the ultra-short pulse laser system may then remain identical for all tools from the production lot.

To determine the ablation attributes of the surface layer of the tool, a series of partial reductions of the surface portion of the surface layer is carried out. A partial reduction of the portion of the surface layer means that removal of only a part of total thickness of the surface layer is made. The removal is carried out on a predefined test area of the surface layer being preferably located outside the active portion of the tool. With unchanged configuration of the ultra-short pulse laser system power output, the partial reductions will result in exposing of the substrate. Each additional partial reduction has smaller surface area than the previous one. A staircase-like shape is created thereby on the transition between the surface of the surface layer and the exposed substrate inside the test area. When no substrate is exposed after a predefined number of partial reductions (e.g., 10), the parameters of the ultra-short pulse laser system are modified (energy density within the pulse). Repeated determinations of the ablation attributes of the surface layer are made with the modified parameters on other test area of the surface layer on the surface of the cutting tool. Following the specified number of the partial reductions and exposing of the substrate, the durability of the surface layer can be easily determined from the number of stairs on the staircase-like shape. It is obvious with the help of the staircase-like shape how many partial reductions is needed for removal of the surface layer. Based on knowledge of values for configuration of the ultra-short pulse laser system from determinations of the ablation attributes, the configuration for the laser stripping is set.

For the purposes of saving time and money, the portion of the surface of the cutting tool being processed may be split up into segments of various sizes. The segmentation permits locating a point of the laser stripping itself. In particular, the segments on the inactive portions may be larger (having larger surface area) than the segments on the active portions. Owing to larger size of the segments on the inactive portions, the surface layer may be removed more quickly from the inactive portions, as relative position of the tool and the laser beam source may need not to be changed so frequently by the increment for the next segment. The large area of the segment means that some of its portions may get outside the depth of field, and locally, the surface layer is not entirely removed. However, less quality removal of the surface layer from the inactive portions resulting in, if any, deteriorated quality of the reconditioned surface layer, is not detrimental.

The laser beam of the ultra-short pulse laser system preferably scans during the laser stripping within the segment in tangential direction to the cutting edge of the cutting tool edge. The direction of scanning corresponds to an angle formed with the tool axis. More efficient reduction is achieved thereby. Said is achieved by the fact that the segment has the highest possible length with said orientation of the segment. When the laser beam starts and stops motion within the segment, the motion speed of the laser beam is lower. Shorter segments result in more motion starts and stops of the laser beam. From this point of view, a longer segment is more time-efficient variant. Furthermore, longer segment means that lower number of segments is enough for removal of the same surface layer, which also saves time needed for repositioning of the cutting tool being processed with respect to the laser beam source by the increment.

In another favourable embodiment, LIPSS (laser-induced periodic surface structure) is created by the laser beam of the ultra-short pulse laser system with linear polarization. LIPSS comprises a system of substantially parallel valleys separated by ridges. The longitudinal axis of LIPSS valleys in said segment is substantially perpendicular to the tool cutting edge. The term "substantially perpendicular" means that it is perpendicular to prevailing direction of the cutting edge of the cutting tool edge. Given the fact that the edge of the cutting edge is in many cases a 3D curve (e.g., helix), the LIPPS valley axis is perpendicular to one point of the cutting edge only, and substantially perpendicular to the other points of the cutting edge. Given the small size of the segment (length of one side in the order of hundreds µm), the curvature of the cutting edge is negligible. The LIPSS orientation depends on polarization of the laser beam and is not influenced by the scanning direction. The LIPPS is well known in the art of laser processing of surfaces. The LIPPS is created using laser picosecond and femtosecond pulses from the ultra-short pulse laser system. The LIPPS comprises a surface relief on which white light decomposes. The relief contains highly periodic (but imperfect) small waves being created by many laser pulses, usually by hundreds or thousands of pulses per point. For the LIPPS description, refer e.g., to US2014083984. The advantage of the embodiment lies in creation of oriented structure, which may be advantageous for improved cutting properties of the tool after following deposition of the surface layer (improved adhesion of the surface layer on the substrate).

The surface layer is advantageously removed from the tool edge in three successive steps: removal of the surface layer from the flank, front end, and from transitional area between the flank and front end that contains the cutting edge. Owing to this, it may be possible to remove the surface layer also from the transitional area of the cutting edge between the flank and front end. In cases where the transitional area has higher curvature, said transitional area may be located outside the depth of field of the laser beam. Therefore, sole removal of the surface layer successively from the flank and edge front end of the cutting tool may not result in removal of the surface layer from the transitional area between the flank and front end.

The technique described above may be suitable for removal of the surface layer both in the form of thin layer as well as coating. Distinguishing whether the cutting tool is provided with the thin layer or coating is not necessary for quality removal of the surface layer. When the laser stripping is used as described, the thin layer is removed substantially as same as the coating.

### Description of drawings

The exemplary embodiment of the proposed technique is described with reference to the drawings, which include:
Fig. 1 - exemplary embodiment of the cutting tool;
Fig. 2 - schematic illustration of the segments with indication of each reduction direction by the beam of the ultra-short pulse laser system scanned in tangential direction to tool cutting edge within said segment;
Fig. 3 - schematic illustration of the LIPPS in one segment, wherein the longitudinal axis of the valleys separated by the ridges is substantially perpendicular to the tool cutting edge;
Fig. 4 - schematic cross-section of the tool portion where testing surface for determination of the ablation attributes is visible, where 5 partial reductions of the surface part of the surface layer were made to expose the substrate;
Fig. 5 - schematic illustration of the edge of the cutting tool in cross-section in normal plane to the cutting edge.

### Exemplary embodiment of the invention

The exemplary embodiment describes the method for surface layer removal using the laser stripping method from the surface of geometrically complex edge 11 of the cutting tool, which is in this example drilling and milling cutting tool. The cutting tool comprises the substrate 1 with the covering surface layer 2 deposited thereon.

The surface of the cutting tool is provided with the active portions 3 and inactive portions 4. The active portions 3 of the edge 11 comprise a flank 5, front end 6, and transitional area 7 forming together the cutting edge 8 of the tool. The inactive portion 4 includes the tool flute intended for removal of chips from the point of cutting.

Clamping of the tool to the ultra-short pulse laser system is made in the first step. Then, using a camera system with illumination feature and a control unit of the ultra-short pulse laser system, tool rotation axis, lead angle of the tool helix, tool diameter reduction in the cutting portion, and tool edge 11 geometry are detected and analyzed. The control unit of the ultra-short pulse laser system is used to split up the tool surface into the portion being processed and the portion not being processed.

Based on data from said analysis and knowledge of the laser beam depth of field, the control unit of the ultra-short pulse laser system splits up the processed portion of the surface of the cutting tool into segments 10 having relative position different by defined increment. The splitting up is made so that the segments 10 have in the inactive portions 4 larger surface area than the segments 10 in the active portions 3.

The determination of the ablation attributes of the surface layer 2 of the tool is made in one surface segment 10 of the tool using the laser beam of the ultra-short pulse laser system. In this way, the parameters of the ultra-short pulse laser system, which are needed for the removal of the surface layer 2, may be determined. A series of partial reductions of the surface part of the surface layer 2 is made to expose the substrate 1 with the configuration of the ultra-short pulse laser system unchanged in the predefined test area 9 of the surface layer 2 located outside the active portions 3 of the tool. Each additional partial reduction has lower area than the previous one. A staircase-like shape is created thereby on the transition between the surface of the surface layer 2 and the substrate 1 inside the test area 9.

The ultra-short pulse laser system is then configured based on the results of the determined ablation attributes. Then, the laser stripping is carried out by scanning of the laser beam of the ultra-short pulse laser system within the defined orientation with respect to the axis of the tool. The laser beam of the ultra-short pulse laser system scans within the segment 10 in tangential direction to the cutting edge 8 of the cutting tool. The LIPSS comprising a system of substantially parallel valleys separated by the ridges is created in the segment 10 by the laser beam of the ultra-short pulse laser system with the linear polarization. The longitudinal axis of LIPSS valleys in said segment 10 is substantially perpendicular to the tool cutting edge 8.

The described process removes the surface layer 2 on the segment surface 10 of statically fixed tool. The laser stripping ends after the surface layer 2 of said segment surface 10 of the tool is removed. For each next segment surface 10, the tool position changes by the increment, and the laser stripping according to previous step is carried out for the next segment 10. The steps including the laser stripping and tool repositioning by the increment repeat, until the surface layer from the whole processed portion is removed. The increment is configured so that each segment 10 touch each other or at least minimally overlap.

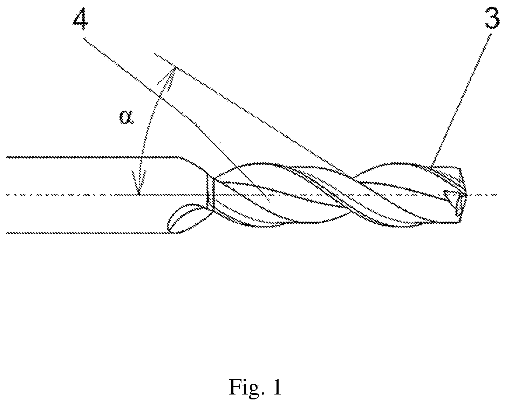

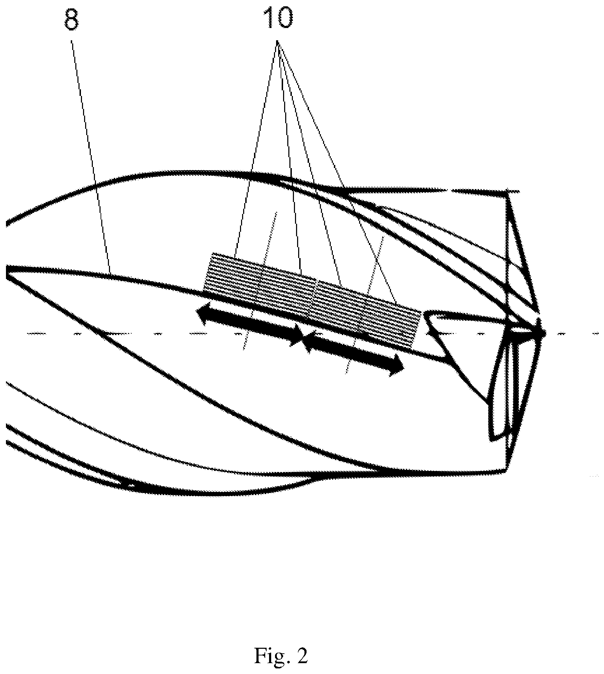

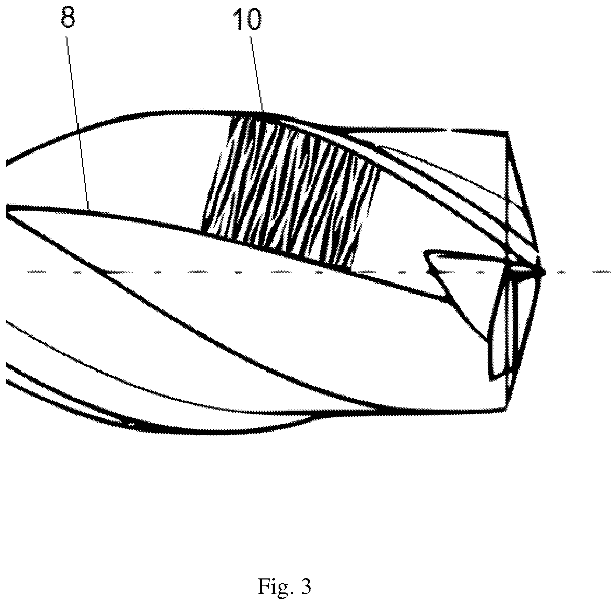

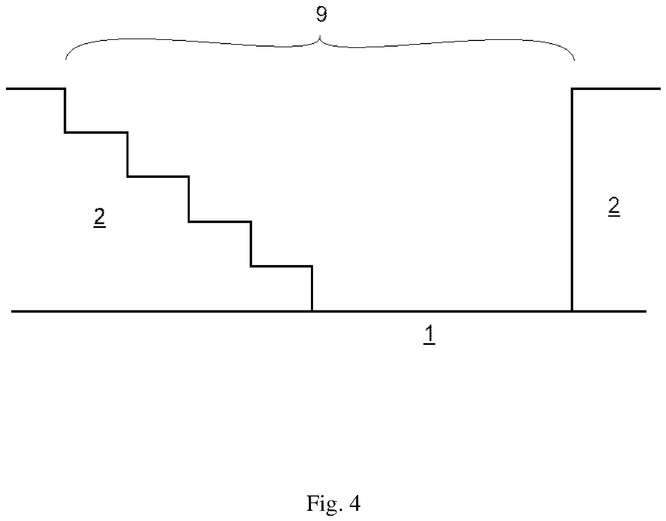

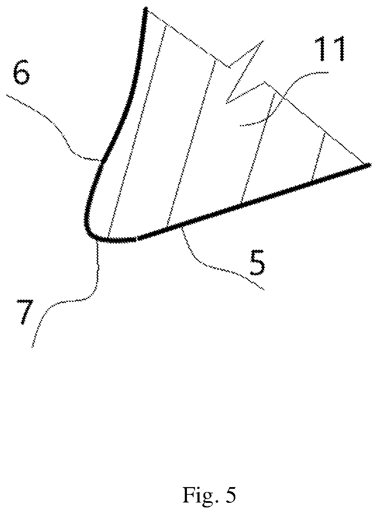

The exemplary embodiment is shown in Fig. 1 to Fig. 5.

### List of reference symbols

- 1 -: substrate
- 2 -: surface layer
- 3 -: active portion
- 4 -: inactive portion
- 5 -: flank
- 6 -: front end
- 7 -: transitional area
- 8 -: cutting edge
- 9 -: test area
- 10 -: segment
- 11 -: edge
- α -: lead angle of cutting edge helix with respect the tool axis

## Claims

1. A method of surface layer (2) removal from the surface of geometrically complex edges (11) of cutting tools using laser stripping method by the ultra-short pulse laser system, where the cutting tool comprises the substrate (1) and covering surface layer (2) deposited thereon,
wherein the surface of the cutting tool is provided with the active portions (3) and inactive portions (4), where said active portions (3) include the edge (11) with the flank (5), front end (6), and transitional area (7), forming together the cutting edge (8) of the tool,
wherein the method comprises clamping of the tool to the ultra-short pulse laser system with the laser beam source, **characterized in that**
then, at least tool rotation axis, lead angle of the tool helix, tool diameter reduction in the cutting portion, and tool edge (11) geometry are detected and analyzed using a camera system with illumination feature and a control unit of the ultra-short pulse laser system,
the control unit of the ultra-short pulse laser system is used to split up the tool surface into the portion being processed and the portion not being processed,
based on data from analysis and knowledge of the laser beam depth of field, the control unit of the ultra-short pulse laser system splits up the processed portion of the surface of the cutting tool into segments (10) having relative position different by defined increment,
then the laser stripping follows so that the laser beam of the ultra-short pulse laser system is scanned within the defined orientation with respect to the axis of the tool, the surface layer (2) on the surface segment (10) of statically fixed tool is removed, and the laser stripping ends after the surface layer (2) of said surface segment (10) of the tool is removed,
wherein for the next surface segment (10), if any, the relative position of the tool and of the laser beam source changes by the increment, and the laser stripping according to previous step is carried out for the next segment (10).

2. The method of surface layer removal according to claim 1 **characterized in that** in a step between the clamping of the tool to the ultra-short pulse laser system and removal of the surface layer (2) in at least one surface segment (10) of the tool, the determination of the ablation attributes of the surface layer (2) of the tool is carried out using the laser beam of the ultra-short pulse laser system to determine the process parameters of the ultra-short pulse laser system needed for the removal of the surface layer (2) itself.

3. The method of surface layer removal according to claim 2 **characterized in that** the ablation attributes of the surface layer (2) of the tool are determined by carrying out of the series of partial reductions of the surface part of the surface layer (2) to expose the substrate (1) in the predetermined test area (9) of the surface layer (2) located outside the active portions (3) of the tool, with unchanged configuration of the power output of the ultra-short pulse laser system so that each next partial reduction has its surface area smaller than the previous partial reduction, which thereby forms a staircase-like shape on the transition between the surface of the surface layer (2) and the substrate (1) inside the test area (9).

4. The method of surface layer removal according to any of the claims 1 to 3 **characterized in that** the splitting up the processed portion of the tool surface into segments (10) having relative position different by the defined increment is carried out by that the segments (10) on the active portions (3) have their surface area smaller than the segments (10) on the inactive portions (4).

5. The method of surface layer removal according to any of the claims 1 to 4 **characterized in that** the laser beam of the ultra-short pulse laser system scans during the laser stripping within the segment (10) in tangential direction to the cutting edge (8) of the tool, corresponding to angle (α) relative to the tool axis.

6. The method of surface layer removal according to any of the claims 1 to 5 **characterized in that** the laser beam of the ultra-short pulse laser system with the linear polarization creates LIPSS in the segment (10) comprising the system of substantially perpendicular valleys separated by the ridges,
wherein the longitudinal axis of LIPSS valleys in said segment (10) is substantially perpendicular to the cutting edge (8) of the tool edge (11).

7. The method of surface layer removal according to any of the claims 1 to 6 **characterized in that** the removal of the surface layer (2) from the cutting edge (8) of the tool edge (11) is carried out in three successive steps of removing of the surface layer (2) from the flank (5), front end (6) and transitional area (7) between the flank (5) and front end (6).

## Patentansprüche

1. Verfahren zur Entfernung der Oberflächenschicht (2) von der Oberfläche geometrisch komplexer Kanten (11) von Schneidwerkzeugen unter Anwendung eines Laserstrippverfahrens mittels eines Ultrakurzpulslasersystems, wobei das Schneidwerkzeug ein Substrat (1) und eine darauf abgeschiedene Oberflächenschicht (2) umfasst, wobei die Oberfläche des Schneidwerkzeugs aktive Bereiche (3) und inaktive Bereiche (4) aufweist, wobei die aktiven Bereiche (3) die Kante (11) mit der Flanke (5), der Spanfläche (6) und dem Übergangsbereich (7) umfassen, die zusammen die Schneidkante (8) des Werkzeugs bilden, wobei das Verfahren das Einspannen des Werkzeugs in das Ultrakurzpulslasersystem mit einer Laserstrahlquelle umfasst, **dadurch gekennzeichnet, dass** mindestens die Rotationsachse des Werkzeugs, der Steigungswinkel der Werkzeughelix, die Durchmesserreduktion im Schneidbereich und die Geometrie der Kante (11) mittels eines Kamerasystems mit Beleuchtungseinheit und einer Steuereinheit des Ultrakurzpulslasersystems erfasst und analysiert werden, die Steuereinheit des Ultrakurzpulslasersystems die Oberfläche des Werkzeugs in einen zu bearbeitenden Bereich und einen nicht zu bearbeitenden Bereich unterteilt, basierend auf den Analysedaten und der bekannten Schärfentiefe des Laserstrahls die Steuereinheit des Ultrakurzpulslasersystems den zu bearbeitenden Bereich der Oberfläche des Schneidwerkzeugs in Segmente (10) mit jeweils unterschiedlicher relativer Position entsprechend einem definierten Inkrement unterteilt, anschließend das Laserstripping derart erfolgt, dass der Laserstrahl des Ultrakurzpulslasersystems in einer definierten Orientierung relativ zur Werkzeugachse scannt, die Oberflächenschicht (2) auf dem Oberflächensegment (10) eines statisch fixierten Werkzeugs entfernt wird und das Laserstripping beendet wird, nachdem die Oberflächenschicht (2) auf dem betreffenden Segment (10) des Werkzeugs entfernt wurde, wobei für das nächste Segment (10), sofern vorhanden, die relative Position zwischen dem Werkzeug und der Laserstrahlquelle um das Inkrement verändert wird und das Laserstripping gemäß dem vorherigen Schritt für das nächste Segment (10) durchgeführt wird.

2. Verfahren nach Anspruch 1, **dadurch gekennzeichnet, dass** zwischen dem Einspannen des Werkzeugs in das Ultrakurzpulslasersystem und der Entfernung der Oberflächenschicht (2) in mindestens einem Segment (10) die Bestimmung der Abtragungseigenschaften der Oberflächenschicht (2) mittels des Laserstrahls des Ultrakurzpulslasersystems durchgeführt wird, um die für die Entfernung der Oberflächenschicht (2) erforderlichen Prozessparameter zu ermitteln.

3. Verfahren nach Anspruch 2, **dadurch gekennzeichnet, dass** die Abtragungseigenschaften der Oberflächenschicht (2) durch eine Reihe von Teilabtragungen des Oberflächenbereichs der Oberflächenschicht (2) ermittelt werden, um das Substrat (1) in einem vordefinierten Testbereich (9) der Oberflächenschicht (2) außerhalb der aktiven Bereiche (3) freizulegen, wobei die Leistungskonfiguration des Ultrakurzpulslasersystems unverändert bleibt und jede nachfolgende Teilabtragung eine kleinere Fläche aufweist als die vorherige, wodurch eine stufenartige Struktur im Übergangsbereich zwischen der Oberflächenschicht (2) und dem Substrat (1) im Testbereich (9) entsteht.

4. Verfahren nach einem der Ansprüche 1 bis 3, **dadurch gekennzeichnet, dass** die Unterteilung des zu bearbeitenden Bereichs der Oberfläche des Werkzeugs in Segmente (10) mit jeweils unterschiedlicher relativer Position in der Weise erfolgt, dass die Segmente (10) in den aktiven Bereichen (3) eine kleinere Fläche aufweisen als die Segmente (10) in den inaktiven Bereichen (4).

5. Verfahren nach einem der Ansprüche 1 bis 4, **dadurch gekennzeichnet, dass** der Laserstrahl des Ultrakurzpulslasersystems beim Laserstripping innerhalb des Segments (10) in einer tangentialen Richtung zur Schneidkante (8) des Werkzeugs scannt, entsprechend einem Winkel (α) relativ zur Werkzeugachse.

6. Verfahren nach einem der Ansprüche 1 bis 5, **dadurch gekennzeichnet, dass** der linear polarisierte Laserstrahl im Segment (10) laserinduzierte periodische Strukturen (LIPSS) erzeugt, bestehend aus im Wesentlichen senkrechten Tälern, die durch Erhebungen getrennt sind, wobei die Längsachse der LIPSS-Täler im betreffenden Segment (10) im Wesentlichen senkrecht zur Schneidkante (8) der Kante (11) des Werkzeugs verläuft.

7. Verfahren nach einem der Ansprüche 1 bis 6, **dadurch gekennzeichnet, dass** die Entfernung der Oberflächenschicht (2) von der Schneidkante (8) der Kante (11) des Werkzeugs in drei aufeinanderfolgenden Schritten erfolgt, wobei die Oberflächenschicht (2) nacheinander von der Flanke (5), der Spanfläche (6) und dem Übergangsbereich (7) zwischen der Flanke (5) und der Spanfläche (6) entfernt wird.

## Revendications

1. Procédé d'élimination de la couche de surface (2) à partir de la surface de bords géométriquement complexes (11) d'outils de coupe à l'aide d'un procédé de décapage au laser utilisant un système laser à impulsions ultra-courtes, l'outil de coupe comprenant un substrat (1) et une couche de surface (2) déposée sur celui-ci, la surface de l'outil de coupe comportant des zones actives (3) et des zones inactives (4), lesdites zones actives (3) comprenant le bord (11) avec le flanc (5), la face de coupe (6) et la zone de transition (7), formant ensemble l'arête de coupe (8) de l'outil, le procédé comprenant le bridage de l'outil dans le système laser à impulsions ultra-courtes avec une source de faisceau laser, **caractérisé en ce que** au moins l'axe de rotation de l'outil, l'angle d'hélice de l'outil, la réduction de diamètre dans la zone de coupe, ainsi que la géométrie du bord (11) sont détectés et analysés à l'aide d'un système de caméra avec éclairage et d'une unité de commande du système laser à impulsions ultra-courtes, l'unité de commande du système laser à impulsions ultra-courtes divise la surface de l'outil en une zone à traiter et une zone non traitée, sur la base des données issues de l'analyse et de la profondeur de champ connue du faisceau laser, l'unité de commande du système laser à impulsions ultra-courtes divise la zone à traiter de la surface de l'outil de coupe en segments (10) ayant chacun une position relative différente selon un incrément défini, puis le décapage au laser est effectué de telle sorte que le faisceau laser du système laser à impulsions ultra-courtes est balayé dans une orientation définie par rapport à l'axe de l'outil, la couche de surface (2) sur le segment (10) d'un outil maintenu de manière statique est éliminée, et le décapage se termine après que la couche de surface (2) sur le segment (10) concerné de l'outil est éliminée, le cas échéant, pour le segment suivant (10), la position relative entre l'outil et la source du faisceau laser est modifiée selon ledit incrément, et le décapage au laser selon l'étape précédente est exécuté pour le segment suivant (10).

2. Procédé selon la revendication 1, **caractérisé en ce qu'**entre l'étape de bridage de l'outil dans le système laser à impulsions ultra-courtes et l'élimination de la couche de surface (2) dans au moins un segment (10) de l'outil, les caractéristiques d'ablation de la couche de surface (2) sont déterminées à l'aide du faisceau laser du système laser à impulsions ultra-courtes afin de déterminer les paramètres du procédé nécessaires à l'élimination de ladite couche de surface (2).

3. Procédé selon la revendication 2, **caractérisé en ce que** les caractéristiques d'ablation de la couche de surface (2) sont déterminées par la réalisation d'une série de réductions partielles de la surface de la couche de surface (2) afin de mettre à nu le substrat (1) dans une zone de test (9) prédéfinie de la couche de surface (2) située hors des zones actives (3), en maintenant la configuration de puissance du système laser à impulsions ultra-courtes inchangée, chaque réduction partielle ayant une surface inférieure à la précédente, formant ainsi une structure en escalier dans la transition entre la couche de surface (2) et le substrat (1) à l'intérieur de la zone de test (9).

4. Procédé selon l'une quelconque des revendications 1 à 3, **caractérisé en ce que** la division de la zone de la surface de l'outil à traiter en segments (10) ayant chacun une position relative différente selon un incrément défini est réalisée de telle manière que les segments (10) situés dans les zones actives (3) ont une surface plus petite que les segments (10) situés dans les zones inactives (4).

5. Procédé selon l'une quelconque des revendications 1 à 4, **caractérisé en ce que**, pendant le décapage au laser, le faisceau laser du système à impulsions ultra-courtes est balayé à l'intérieur du segment (10) dans une direction tangentielle à l'arête de coupe (8) de l'outil, correspondant à un angle (α) par rapport à l'axe de l'outil.

6. Procédé selon l'une quelconque des revendications 1 à 5, **caractérisé en ce que** le faisceau laser à polarisation linéaire forme, dans le segment (10), des structures périodiques induites par laser (LIPSS), constituées de vallées sensiblement perpendiculaires séparées par des crêtes, l'axe longitudinal des vallées LIPSS dans ledit segment (10) étant sensiblement perpendiculaire à l'arête de coupe (8) du bord (11) de l'outil.

7. Procédé selon l'une quelconque des revendications 1 à 6, **caractérisé en ce que** l'élimination de la couche de surface (2) de l'arête de coupe (8) du bord (11) de l'outil est réalisée en trois étapes successives, consistant à éliminer la couche de surface (2) successivement du flanc (5), de la face de coupe (6) et de la zone de transition (7) entre le flanc (5) et la face de coupe (6).
